# EUROPÄISCHE PATENTANMELDUNG

(11) **EP 0 869 320 A2**
(43) Veröffentlichungstag der Anmeldung: **07.10.1998**
(21) Anmeldenummer: 98104299.7
(22) Anmeldetag: 10.03.1998
(51) Int. Cl.: F24D 3/14

(54) **Fussbodenheizung und Verfahren zu deren Montage**

(30) Priorität: 03.04.1997 DE 19713820
(71) Anmelder: Ilsanker, Michael, Dipl.-Ing. FH, 83471 Engedey (DE)
(72) Erfinder: Ilsanker, Michael, Dipl.-Ing. FH, 83471 Engedey (DE)
(74) Vertreter: Haft, von Puttkamer, Berngruber, Czybulka

(57) **Zusammenfassung**

Zur Montage einer Fußbodenheizung mit einer Rohrschlange mit parallelen Rohrsträngen (8, 9) werden Bleche verwendet, die mit Ausbuchtungen (4, 5, 5') versehen sind und zwischen einem Mittelabschnitt (1) und zwei Endabschnitten (2, 3) zwei Rillen (6, 7) aufweisen, in die zwei benachbarte Rohrstränge (8, 9) der Rohrschlange eingesetzt werden. Bei den zum Einsetzen der Rohrstränge verwendeten Bleche sind die Endabschnitte (2, 3) gegenüber ihrem Mittelabschnitt (1) um einen Winkel (α) abgewinkelt. Die Rillen (6, 7) weisen einen halbkreisförmigen Abschnitt (10) mit einem dem Rohrdurchmesser entsprechenden Durchmesser auf. Über den halbkreisförmigen Abschnitt (10) hinaus erstrecken sich Seitenwandabschnitte (11, 12) mit einem maximal dem Rohrdurchmesser entsprechenden gegenseitigen Abstand. Die Endabschnitte (2, 3) werden nach dem Einsetzen der Rohrstränge (8, 9) in die Rillen (6, 7) in eine Ebene mit dem Mittelabschnitt (1) gebogen, so daß die Seitenwandabschnitte (11, 12) die Rohrstränge (8, 9) fest gegen den halbkreisförmigen Abschnitt (10) drücken.

## Beschreibung

Die Erfindung bezieht sich auf ein Verfahren zur Montage einer Fußbodenheizung nach dem Oberbegriff des Anspruchs 1. Sie hat auch eine solche Fußbodenheizung zum Gegenstand.

Ein derartiges Verfahren ist aus DE 30 32 419 A1 bekannt. Um eine gute wärmeleitende Verbindung zwischen den Blechen und den Rohrsträngen der Rohrschlage zu erhalten, werden danach die Rohrstränge in divergierende Rillen eingesetzt, deren Öffnungsbereiche anschließend mit einem zangenförmig oder keilförmig ausgebildeten Werkzeug so gegen die Rohrwand gedrückt werden, daß die Rilleninnenwand über einen Winkel von etwa 240° an der Rohrwandung anliegt.

Ein derartiges Spezialwerkzeug ist jedoch kostspielig und umständlich in der Handhabung. Damit es an der Außenseite der Rillen angreifen kann, müssen zudem die Ausbuchtungen in einem Abstand von der Rille angeordnet werden. Damit wird die Zahl der Ausbuchtungen herabgesetzt, die der Versteifung der Bleche und vor allem der Vergrößerung der Oberfläche der Bleche dienen.

Bei dem keilförmig ausgebildeten Werkzeug treten zusätzliche Schwierigkeiten dadurch auf, daß die Keilflächen die Rillenwandung im Öffnungsbereich nicht nur nach innen, sondern zugleich nach unten drücken, so daß mit dem Werkzeug die Kontaktfläche zwischen Rohrwandung und Rillenwand nicht vergrößert wird, sondern sogar verkleinert werden kann. Bei dem keilförmigen Werkzeug ist es daher notwendig, dessen Keilflächen bzw. die Außenseiten der Rillen zusätzlich zu behandeln, beispielsweise mit einem Schmiermittel.

Ferner ist es bekannt, Stahlfederklammern zum Zusammendrücken der Öffnungsbereiche der Rillen zu verwenden. Derartige Klammern sind nicht nur mit zusätzlichen Herstellungskosten verbunden; vielmehr sind sie auch umständlich in der Handhabung und zeitaufwendig, zumal sie in kurzen Abständen und damit in entsprechend großer Zahl angebracht werden müssen.

Nach einem weiteren bekannten Verfahren zur wärmeleitenden Verbindung der Bleche mit den Rohrsträngen wird der Spalt zwischen der Rillenwand und der Rohrwandung mit einer wärmeleitfähigen Paste gefüllt. Eine derartige Paste ist nicht nur teuer; vielmehr ist das Auftragen äußerst zeitaufwendig und diffizil. So kann beim Auftragen der Paste beispielsweise Schmutz festkleben, der auf einer Baustelle praktisch allgegenwärtig ist. Auch ist der zum Auftragen verwendete Pinsel häufig nach kurzer Zeit unbrauchbar.

Nach wieder einem anderen bekannten Verfahren zur wärmeleitenden Verbindung des Rohres in der Blechrille hat man Bleche verwendet, bei denen der Endabschnitt neben der Rille als schmaler ebener Flansch ausgebildet ist. Zwei Bleche werden dann so aufeinander angeordnet, daß sich die halbschalenförmige Rille des einen Blechs mit der halbschalenförmigen Rille des anderen Blechs zu einem rohrartigen Kanal ergänzt, in dem der Rohrstrang angeordnet wird. Links und rechts neben dem rohrartigen Kanal werden unter dieser Anordnung Holzleisten verlegt. Dann werden mit einem Tacker von oben Klammern auf beiden Seiten des rohrartigen Kanals durch den Flansch und das darunter liegende Blech in die Holzleisten getrieben. Dabei können durch Verrutschen der Holzleisten und Lösen der Klammern Probleme auftreten.

Aufgabe der Erfindung ist es, ein einfaches Montageverfahren für eine hochwirksame wärmeleitende Verbindung zwischen den Rohrsträngen der Rohrschlange und den Blechen einer solchen Fußbodenheizung zur Verfügung zu stellen.

Dies wird erfindungsgemäß mit dem im Anspruch 1 gekennzeichneten Verfahren erreicht. In den Unteransprüchen sind vorteilhafte Ausgestaltungen der Erfindung wiedergegeben.

Nach dem erfindungsgemäßen Verfahren werden zum Einsetzen der Rohrstränge Bleche verwendet, bei denen die Endabschnitte und die Mittelabschnitte nicht in einer Ebene (Gerade) liegen, sondern die Endabschnitte gegenüber den Mittelabschnitten um einen Winkel von mindestens 3°, vorzugsweise von mindestens 5° und im allgemeinen von etwa 10° abgewinkelt sind.

Die Rillen dieser Bleche, in die die Rohrstränge eingesetzt werden, weisen einen halbkreisförmigen Abschnitt mit einem dem Rohrdurchmesser entsprechenden Durchmesser auf. Von dem halbkreisförmigen Abschnitt der Rille erstrecken sich entweder nach oben oder nach unten Seitenwandabschnitte. Die Seitenwandabschnitte können parallel zueinander verlaufen, also einen dem Rohrdurchmesser entsprechenden gegenseitigen Abstand besitzen. Vorzugsweise sind sie jedoch mit einem Winkel von wenigstens 5°, im allgemeinen von etwa 10° nach innen geneigt.

Nach dem Einsetzen der Rohrstränge in die so ausgebildeten Rillen werden die Endabschnitte in eine Ebene mit den Mittelabschnitten gebogen. Dadurch werden die Seitenwandabschnitte der Rillen mit entsprechend großer Hebelkraft gegen das Rohr gedrückt, wodurch das Rohr mit einem entsprechend hohen Druck gegen den halbkreisförmigen Abschnitt der Rille gedrückt wird.

Insgesamt liegt damit zwar die Rohrwandung an der Rillenwand mit einer Kontaktfläche an, die ggf. nur 180° betragen kann. Entscheidend ist jedoch der hohe Druck, mit dem die Rohrwandung gegen die Rillenwand an der Kontaktfläche gedrückt wird. Denn aufgrund der jeder Fläche inhärenten Rauhigkeit ist die Wärmeleitung auch wesentlich von dem Druck abhängig, mit dem zwei Flächen an der Kontaktfläche gegeneinander gepresst werden.

Die Ausbuchtungen weisen vorzugsweise eine rechteckige Grundfläche auf. Das heißt, sie sind vorzugsweise pyramidenförmig oder walmdachförmig ausgebildet.

Vorzugsweise werden erfindungsgemäß Bleche verwendet, bei denen sich die Rillen quer durch walmdachartige Ausbuchtungen erstrecken. Damit können die Rillen im Bereich der Ausbuchtungen eine dem Rohrdurchmesser annähernd entsprechende Tiefe aufweisen, d. h. eine Tiefe, die zumindest drei Viertel des Außendurchmessers des Rohres entspricht und ggf. auch größer als der Außendurchmesser des Rohres sein kann. Durch die hohen Seitenwandabschnitte in diesem Bereich werden beim Biegen der Blechendabschnitte in die Ebene der Mittelabschnitte auf das Rohr hohe Kräfte aufgebracht und damit ein hoher Anpreßdruck im Bereich der halbkreisförmigen Kontaktfläche der Rohrwandung auf die Rillenwand ausgeübt.

Um die Montage zu erleichtern, können die Seitenwandabschnitte im Bereich der walmdachartigen Ausbuchtungen mit Noppen versehen sein, die in die Rille ragen. Dadurch werden die Rohrstränge fixiert, bevor die Seitenwandabschnitte in die Ebene der Mittelabschnitte gebogen werden.

Die Fußbodenheizung kann naß oder trocken verlegt werden. Bei der Naßverlegung werden die Bleche so angeordnet, daß die Rillen mit ihren Öffnungen nach oben weisen. Dadurch kann die Zementbrühe die Rillen oberhalb der Rohrstränge auffüllen, ohne daß Lufteinschlüsse entstehen. Das Gewicht der Zementbrühe (Estrich) auf dem Blech drückt die Endabschnitte der Bleche gegen die ebene Unterkonstruktion und damit in eine Ebene mit den Mittelabschnitten der Bleche. Bei der Trockenverlegung werden die Bleche so angeordnet, daß die Rillen mit ihren Öffnungen nach unten weisen. Die Bleche liegen dabei auf einer komprimierbaren Isolierung auf. Auf die Bleche drückt von oben der Bodenbelag, beispielsweise Bodenbretter oder Estrichplatten, wodurch die Endabschnitte der Bleche in eine Ebene mit dem Mittelabschnitt gebogen werden.

Nachstehend ist eine Ausführungsform des erfindungsgemäßen Verfahrens anhand der beigefügten Zeichnung näher erläutert.

Darin zeigen:
- Fig. 1: eine Draufsicht auf ein Blech mit Rohrsträngen nach einer Ausführungsform; und
- Fig. 2: einen Schnitt durch eine Hälfte des Blechs nach Figur 1 entlang der Linie II-II in Figur 1.

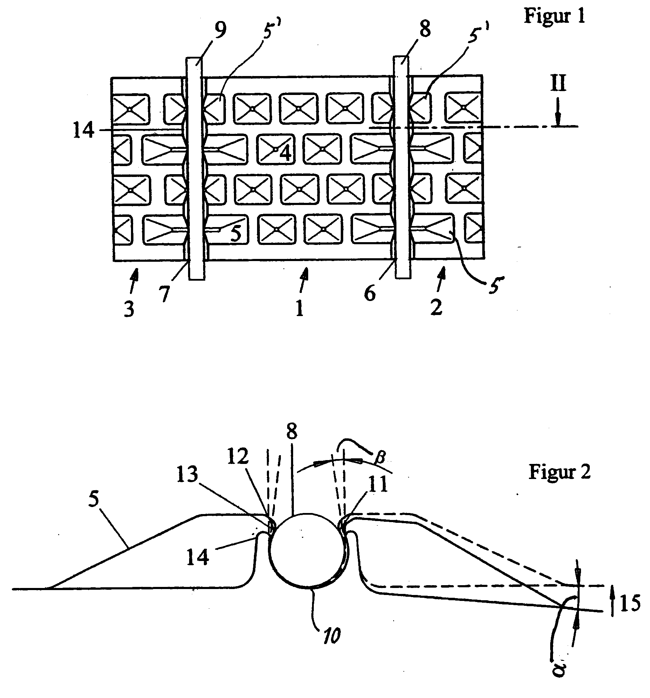

Gemäß Figur 1 weist das Blech, beispielsweise ein Aluminiumblech, einen Mittelabschnitt 1 und zwei Endabschnitte 2, 3 auf.

Das gesamte Blech, also die Endabschnitte 2, 3 und der Mittelabschnitt 1 sind mit Ausbuchtungen 4, 5, 5' versehen. Die Ausbuchtungen 4, 5, 5' sind in Blechlängsrichtung hintereinander in Reihe angeordnet.

Zwischen jedem Endabschnitt 2, 3 und dem Mittelabschnitt 1 ist eine Querrille 6, 7 vorgesehen. Die Rillen 6, 7 erstrecken sich quer mitten durch die Ausbuchtungen 5, 5, hindurch, die dazu im Bereich der Rillen 6, 7 walmdachartig ausgebildet sind. Außerhalb der Rillen 6, 7 sind die Ausbuchtungen 4 als Pyramiden mit quadratischer Grundfläche ausgebildet. Die Ausbuchtungen 4, 5, 5' jeder Reihe sind gegenüber der benachbarten Reihe um eine halbe Pyramidenbreite versetzt angeordnet. Dazu ist eine lange 5 und eine kurze 5' walmdachartige Ausbuchtung in Richtung der Rillen 6, 7 abwechselnd vorgesehen.

Auf diese Weise sind sowohl die Endabschnitte 2, 3 wie der Mittelabschnitt 1 durch die Ausbuchtungen 4, 5, 5' in Blechlängsrichtung bis zu den Rillen 6, 7 versteift.

In den Rillen 6, 7 sind die Rohrstränge 8, 9 der Rohrschlange der Fußbodenheizung angeordnet. Die Rohrschlange besteht vorzugsweise aus Kunststoff, beispielsweise Polypropylen oder Polyethylen.

Die Rohrstränge 8, 9 werden, wie in Figur 2 anhand des Rohres 8 veranschaulicht, in die Rille 6 eines Blechs gelegt, bei dem der Endabschnitt 2 gegenüber dem Mittelabschnitt 1 um einen Winkel α abgewinkelt ist. Die Rille 6 des abgewinkelten Bereichs weist einen halbkreisförmigen Abschnitt 10 auf, dessen Innendurchmesser dem Außendurchmesser des Rohres 8 entspricht.

Die Rille 6 ist ferner mit zwei Seitenwandabschnitten 11, 12 versehen, die sich von dem halbkreisförmigen Abschnitt 10 nach oben erstrecken. Die Seitenwandabschnitte 11, 12 sind mit einem Winkel β etwas nach innen geneigt. Das heißt, im Bereich ihrer Verbindung mit den halbkreisförmigen Abschnitt 10 entspricht der gegenseitige Abstand der Seitenwandabschnitte 11, 12 dem Außendurchmesser des Rohres 8, wobei sich der gegenseitige Abstand der Seitenwandabschnitte 11, 12 mit zunehmenden Abstand von dem halbkreisförmigen Abschnitt 10 in Richtung der Öffnung der Rille 6 verringert.

Wie aus Figur 2 ersichtlich, erstrecken sich die Seitenwände 11, 12 der Rille 8 im Bereich der Ausbuchtungen 5 bis etwa zum oberen Scheitel des Rohres 8. Das heißt, im Bereich der Ausbuchtungen 4, 5, 5' weist die Rille 6 eine Tiefe auf, die dem Außendurchmesser des Rohres 8 entspricht. Im Bereich 14 zwischen den Ausbuchtungen 5, 5' ist der Rillenrand niedriger.

Nach dem Einsetzen der Rohrstränge 8, 9 in die Rillen 6, 7 der Bleche mit nach unten abgewinkelten Endabschnitten 2, 3, werden die Endabschnitte 2, 3 gemäß dem Pfeil 15 nach oben in den Montageendzustand gebogen, in dem die Seitenabschnitte 2, 3 und der Mittenabschnitte 1 in einer Ebene liegen. Dieser Montageendzustand ist in Figur 2 gestrichelt dargestellt.

Der durch den Endabschnitt 2 gebildete lange Hebelarm und der demgegenüber durch die Rillenwand 11, 12 gebildete kurze Hebelarm führen zu einer entsprechend hohen Kraft, mit der die Rillenwand 11, 12 das Rohr 8 in den halbkreiförmigen Abschnitt 10 drückt. Entsprechend groß ist der Anpreßdruck, mit dem das Rohr 8 vollflächig in dem halbkreisförmigen Abschnitt 10 an die Rillenwand gedrückt wird. Damit wird eine hohe Wärmeleitung zwischen dem Rohr 8 und der Rille 6 und damit dem Blech gewährleistet.

Da sich die Blechrille 6 und das Rohr 8 plastisch verformen, wird zugleich die Kontaktfläche zwischen der Rillenwand und dem Rohr 8 gegenüber der ursprünglichen Kontaktfläche von 180° vergrößert.

Um die Rohrstränge 8, 9 nach dem Einsetzen, jedoch vor dem Knicken der Endabschnitte 2, 3 in die Ebene des Mittelabschnitts 1 zu fixieren, sind die Seitenwände 11, 12 der Rillen 6, 7 im Bereich der Ausbuchtungen 5, 5' mit nach innen vorspringenden Noppen 13 versehen, wie in Figur 2 dargestellt.

## Patentansprüche

1. Verfahren zur Montage einer Fußbodenheizung mit einer Rohrschlange mit parallelen Rohrsträngen und mit Blechen, die mit Ausbuchtungen versehen sind und die zwischen einem Mittelabschnitt und ihren beiden Endabschnitten zwei Rillen aufweisen, in die zwei benachbarte Rohrstränge der Rohrschlange durch Biegen der Rillenwandung gegen die Rohrwandung eingesetzt werden, dadurch gekennzeichnet, daß zum Einsetzen der Rohrstränge in die Rillen (6, 7) Bleche verwendet werden, deren Endabschnitte (2, 3) gegenüber ihrem Mittelabschnitt (1) um einen Winkel (α) abgewinkelt sind und bei denen die Rillen (6, 7) jeweils aus einem halbkreisförmigen Abschnitt (10) mit einem dem Rohrdurchmesser entsprechenden Durchmesser und sich über den halbkreisförmigen Abschnitt (10) hinaus erstreckenden Seitenwandabschnitten (11, 12) mit einem maximal dem Rohrdurchmesser entsprechenden gegenseitigen Abstand bestehen, und die Endabschnitte (2, 3) nach dem Einsetzen der Rohrstränge (8, 9) in die Rillen (6, 7) in eine Ebene mit dem Mittelabschnitt (1) gebogen werden, so daß die Seitenwandabschnitte (11, 12) die Rohrstränge (8, 9) fest gegen den halbkreisförmigen Abschnitt (10) drücken.

2. Verfahren nach Anspruch 1, dadurch gekennzeichnet, daß zum Einsetzen der Rohrstränge (8, 9) Bleche verwendet werden, bei denen der Winkel (α), mit dem die Endabschnitte (2, 3) gegenüber dem Mittelabschnitt (1) abgewinkelt sind, mindestens 5° beträgt.

3. Verfahren nach Anspruch 1 oder 2, dadurch gekennzeichnet, daß zum Einsetzen der Rohrstränge (8, 9) Bleche verwendet werden, bei denen die Seitenwandabschnitte (11, 12) der Rillen (6, 7) mit einem Winkel (β) von wenigstens 5° nach innen geneigt sind.

4. Verfahren nach einem der vorhergehenden Ansprüche, dadurch gekennzeichnet, daß zum Einsetzen der Rohrstränge (8, 9) Bleche verwendet werden, bei denen sich die Rillen (6, 7) durch die Ausbuchtungen (5, 5') erstrecken, wobei die Rillen (6, 7) im Bereich der Ausbuchtungen (5, 5') eine dem Rohrdurchmesser entsprechende Tiefe aufweisen.

5. Verfahren nach Anspruch 4, dadurch gekennzeichnet, daß die Seitenwandabschnitte (11, 12) im Bereich der Ausbuchtungen (5, 5') mit nach innen ragenden Noppen (13) versehen sind.

6. Fußbodenheizung bestehend aus einer Rohrschlange mit parallelen Rohrsträngen (8, 9) und aus einem Blech mit wenigstens zwei parallelen zwischen zwei Enabschnitten (2, 3) und einem Mittelabschnitt (1) des Bleches angeordneten Rillen (6, 7) zum Einsetzen der Rohrstränge (8, 9) und mit Ausbuchtungen (4, 5, 6), die in den Endabschnitten (2, 3) und in dem Mittelabschnitt (1) auf einer Blechseite senkrecht zu den Rillen angeordnet sind, dadurch gekennzeichnet, dass die in den Endabschnitten (2, 3) und in dem Mittelabschnitt (1) gebildeten, an die Rillen (6, 7) angrenzenden Ausbuchtungen (5, 6) an der Seite der Rillen (6, 7) mit Seitenwandabschnitten (11, 12) versehen sind, deren gegenseitiger Abstand gleich dem Durchmesser der Rohrstränge (8, 9) beim Einsetzen der Rohrstränge (8, 9) in die Rillen (6, 7) ist, wobei das Blech im Bereich des kreisbogenförmigen Abschnittes (10) der Rillen (6, 7) zur Biegung des Endabschnittes (2, 3) und der Seitenwandabschnitte (11, 12) in Bezug auf die Achse der Rillen (6, 7) um einen Winkel β ≥ 5° biegsam ist.

7. Fußbodenheizung nach Anspruch 6, dadurch gekennzeichnet, dass die Endabschitte (2, 3) zum Einsetzen der Rohrstränge (8, 9) in die Rillen (6, 7) gegenüber dem Mittelabschnitt (1) um einen Winkel α von wenigstens 5° bei nach oben gerichteter Öffnung der Rillen (6, 7) nach unten gebogen sind.
